# EUROPEAN PATENT SPECIFICATION

(11) **EP 1 920 583 B1**
(45) Date of publication and mention of the grant of the patent: **06.05.2009**
(21) Application number: 06735698.0
(22) Date of filing: 23.02.2006
(51) Int. Cl.: H04M 1/725, H04N 5/76, H04N 7/14

(54) **REDIRECTING BROADCAST SIGNALS FOR RECORDING PROGRAMMING**
UMLENKEN VON AUSGESTRAHLTEN SIGNALEN FÜR AUFZEICHNUNG VON PROGRAMMMATERIAL
REDIRECTION DE SIGNAUX DE DIFFUSION POUR PROGRAMMATION D'ENREGISTREMENT

(30) Priority: 08.08.2005 US 161574
(43) Date of publication of application: 14.05.2008
(73) Proprietor: Sony Ericsson Mobile Communications AB, 221 88 Lund (SE)
(72) Inventor: BLOEBAUM, Leland, Scott, Cary, North Carolina 27519 (US)
(74) Representative: Charles, Glyndwr
(86) International application number: PCT/US2006/006145
(87) International publication number: WO 2007/018596

(56) References cited:
- EP-A- 1 424 838
- WO-A-20/04039072
- US-A- 5 706 388
- US-A1- 2003 097 659
- US-A1- 2004 204 020

## Description

### Background Art

The present invention relates to communications devices and systems, and more particularly to a communications device, system and method to redirect broadcast signals for recording programming for later viewing.

Communications devices are becoming more sophisticated and including many new features and capabilities. One such feature is the capability to receive mobile broadcast signals or mobile television or the like, such as digital video broadcast-handheld (DVB-H), digital media broadcast (DMB), integrated services digital broadcast-terrestrial (ISDB-T) or similar technologies. There are circumstances when a user has to shut-off such a communications device either by choice or by accident. This will result in interrupting deception of mobile broadcast signals being received by the communications device. For example, the user may be going through security at an airport and is being required to shut down his or her communications device on which the user is viewing some important programming, or the power source or battery on the communications device is nearly fully dissipated and about to shut-off. In these cases, the user may be watching a very important program that he or she does not want to miss, such as a championship sporting event, movie or other programming that will be missed.

Document US-A-5 706 388 discloses a recording system for recording a television program when the user is forced to stop watching the program due to an incoming call.

### Summary

In accordance with an embodiment of the present invention, a method for redirecting broadcast signals for recording may include detecting occurrence of a predetermined condition or event. The method may also include transmitting a message to redirect the broadcast signals for recording programming carried by the broadcast signals. The method may further include transmitting any options or instructions associated with redirecting the broadcast signals or recording the programming.

In accordance with another embodiment of the present invention, a method for redirecting broadcast signals for recording may include recording programming in response to receiving a message to start recording programming carried by the broadcast signals and according to any options or instructions. The message to start recording programming may be sent in response to detecting occurrence of a predetermined condition or event in a communications device. The method may also include transmitting broadcast signals of the recorded programming in response to receiving a signal or message to transmit the recorded programming. The signal or message to transmit the recorded programming may be sent in response to a change in the predetermined condition or event. The method may further include continuing to record any portions of the programming according to any options or instructions.

In accordance with another embodiment of the present invention, a system for redirecting broadcast signals for recording may include a recorder to record programming in response to receiving a message to start recording programming carried by the broadcast signals and to record the programming according to any options or instructions. The message to start recording programming may be sent by a communications device in response to detecting occurrence of a predetermined condition or event. The system may also include a transceiver to broadcast signals of the recorded programming in response to receiving a signal or message to transmit the recorded programming. The signal to transmit the recorded programming may be sent by the communications device in response to a change in the predetermined condition or event.

In accordance with another embodiment of the present invention, a communications device may include a feature adapted to generate a message to redirect broadcast signals for recording the programming carried by the broadcast signals in response to detecting occurrence of a predetermined condition or event. The communications device may also include a transmitter to transmit the message to redirect the broadcast signals and any options or instructions associated with redirecting the broadcast signals or recording the programming.

In accordance with another embodiment of the present invention, a computer program product for redirecting broadcast signals for recording may include a computer readable medium having computer usable program code embodied therein. The computer readable medium may include computer usable program code configured to detect occurrence of a predetermined condition or event. The computer program product may also include computer usable program code configured to transmit a message to redirect the broadcast signals for recording programming carried by the broadcast signals. The computer program product may further include computer usable program code configured to transmit any options or instructions associated with redirecting the broadcast signals or recording the programming.

Other aspects and features of the present invention, as defined solely by the claims, will become apparent to those ordinarily skilled in the art upon review of the following non-limited detailed description of the invention in conjunction with the accompanying figures.

### Brief Description Of The Drawings

Figures 1A, 1B and 1C (collectively Figure 1) are a flow chart of an example of a method for redirecting broadcast signals for recording in accordance with an embodiment of the present invention.
Figure 2 is a flow chart of an example of a method for redirecting broadcast signals for recording in accordance with another embodiment of the present invention
Figures 3A, 3B and 3C (collectively Figure 3) are a block schematic diagram of an exemplary system and communications device for redirecting broadcast signals for recording in accordance with an embodiment of the present invention.

### Detailed Description

The following detailed description of embodiments refers to the accompanying drawings, which illustrate specific embodiments of the invention. Other embodiments having different structures and operations do not depart from the scope of the present invention. As will be appreciated by one of skill in the art, the present invention may be embodied as a method, system, or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product on a computer-usable storage medium having computer-usable program code embodied in the medium.

Any suitable computer readable medium may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Computer program code for carrying out operations of the present invention may be written in an object oriented programming language such as Java, Smalltalk, C++ or the like. However, the computer program code for carrying out operations of the present invention may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network (LAN) or a wide area network (WAN), or the connection may be made to an external computer (for example, through the Internet using an Internet Service Provider).

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

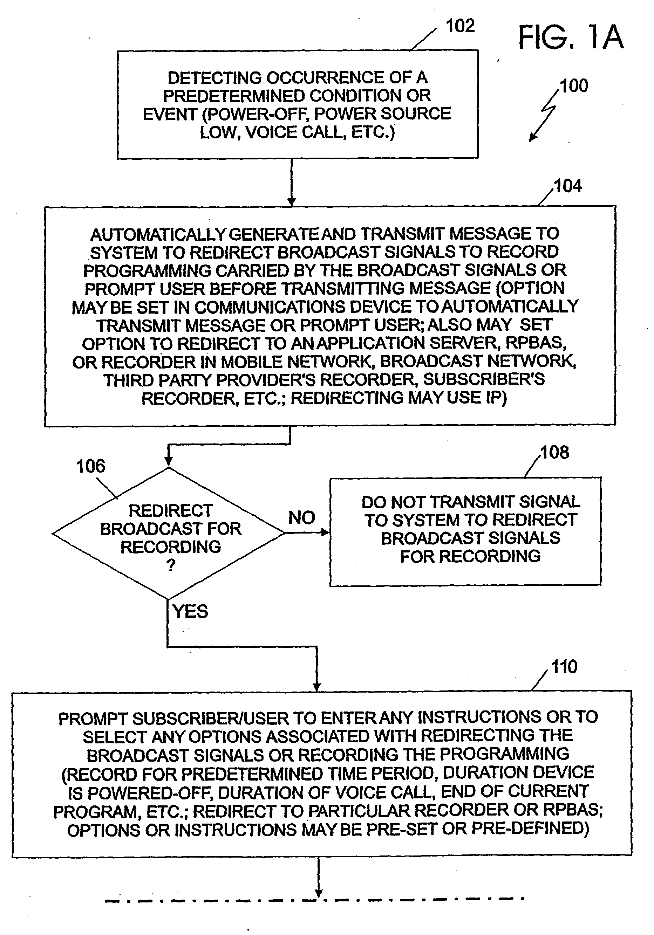

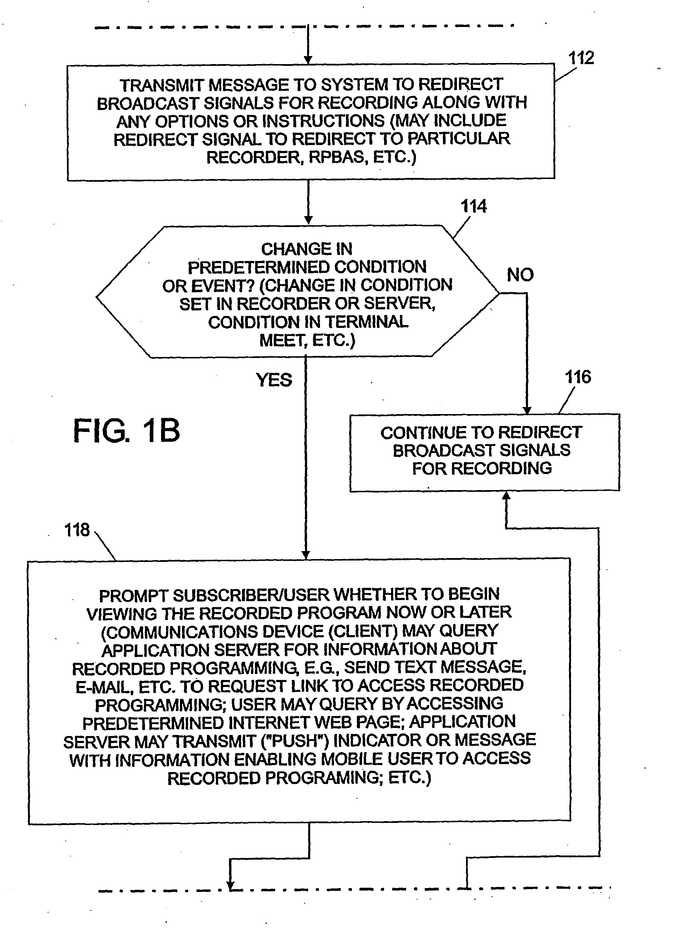

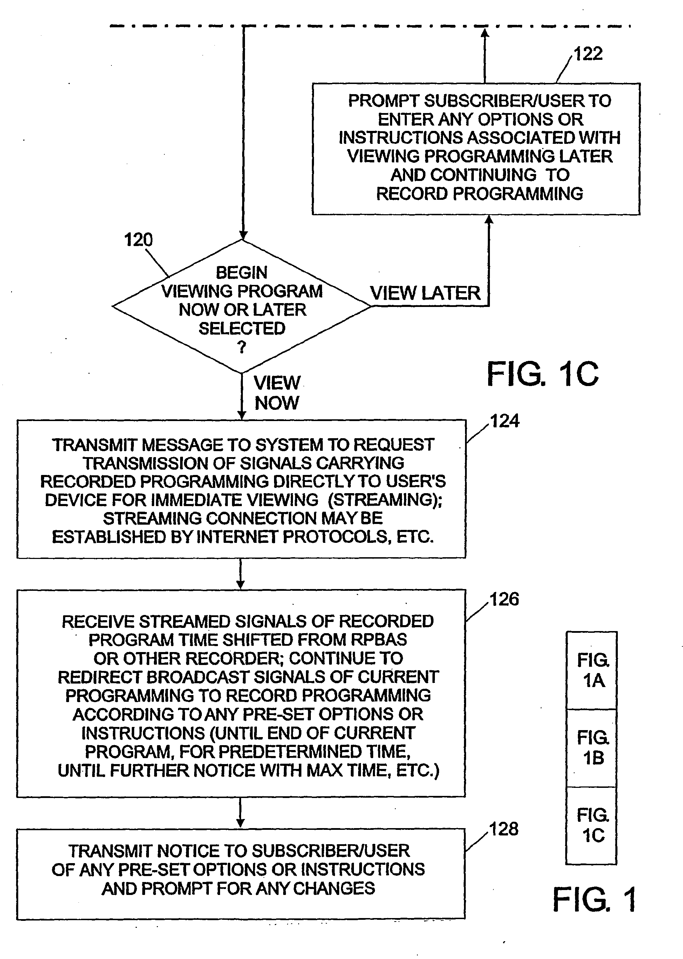

Figures 1A, 1B and 1C (collectively Figure 1) are a flow chart of an example of a method 100 for redirecting broadcast signals for recording in accordance with an embodiment of the present invention. The exemplary operations and functions illustrated in method 100 may be performed by a communications device or partly by a communications device, communications system or network, mobile television provider or the like and partly by the communications device or any combination thereof.

In block 102, occurrence of a predetermined condition or event may be detected. The predetermined condition or event may be the communications device being powered-off by the user. The predetermined condition or event may also be detecting the device power source being low before being fully dissipated, the communications device receiving a voice call or other communication or some other condition or event that may hinder the user watching any programming carried by broadcast signals being received by the communications device or mobile TV device associated with or coupled to the communications device.

In block 104, a message or signal may be automatically generated and transmitted by the communications device to a communications system or network to redirect the broadcast signals to record the programming being carried by the broadcast signals. The communications system or network may be a mobile radio access network (RAN) or similar network or system. In another embodiment of the present invention, the user or subscriber may be prompted before transmitting the message whether the user desired to have the broadcast signals redirected for recording. The user may be prompted by an audio alert, visual alert or both. A tone may be provided with a text message on a display of the communications device before sending the redirect signal or message. Any prompts associated with the invention may be presented and responded to via an interactive voice feature, a graphical user interface (GUI) presented on the display of the communications device or the like. An option may be pre-selected by the user to automatically transmit the redirect message or prompt the user first. As used herein, redirecting the broadcast signals may be defined as also directing or channeling the broadcast signals, that are currently being broadcasted by the mobile TV system to other subscribers, to a device or system that can record and play back the recorded programming carried by the broadcast signals, such as a record playback application server (RPBAS) or the like.

There may be other pre-set or pre-selected options associated with redirecting the broadcast signals and recording the programming carried by the broadcast signals. For example, the broadcast signals may be redirected to an application server, record play back application server (RPBAS) or other recorder in the mobile communications network, in the broadcast network, to a third party provider's recorder or RPBAS, or to a recorder or recording system in a network on the user's premises. The redirection of the broadcast signals for recording may be accomplished by using Internet protocols such as those specified in the Internet Protocol (IP) Multimedia Subsystem (IMS) associated with releases 5 and 6 of the Third Generation Partnership Project (3GPP) standards or the like. As described in more detail herein, there may also be options selected or entered associated with a duration for redirecting the signals or for recording the programming.

In block 106, a determination may be made whether redirecting the broadcast signals for recording has been selected or authorized. If not selected in block 104 or not pre-set to automatically generate and transmit the redirect message, the method 100 may advance to block 108. In block 108, a signal or message to redirect the broadcast signals for recording will not be sent to the system or network.

If redirecting the broadcast signals for recording programming is selected or pre-set in block 104, the method 100 may advance to block 110. In block 110, the user may be prompted to enter any instructions or to select any options associated with redirecting the broadcast signals or recording the programming. For example the signals may be redirected or the programming recorded for a predetermined or pre-set time period, for the duration that the communications device is powered-off, for the duration of a voice call, until the end of the current program or other options or instructions. Similar to that previously discussed, the user may provide instructions or select options to redirect the broadcast signals to record the programming using a RPBAS or other recorder in the mobile communications network or in the broadcast network, to a third party recorder or RPBAS or to the user's or subscriber's recorder or system. The options or instructions may be pre-set or pre-defined or the user may be prompted to select the options by an interactive voice system or graphical user interface (GUI) presented on a display of the communications device or a combination of these features.

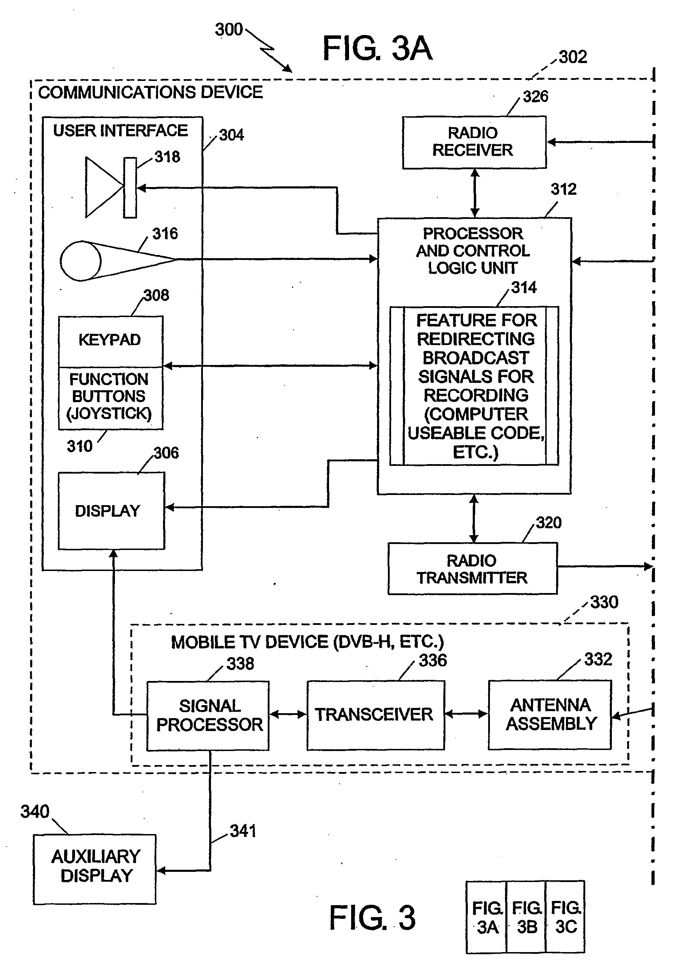

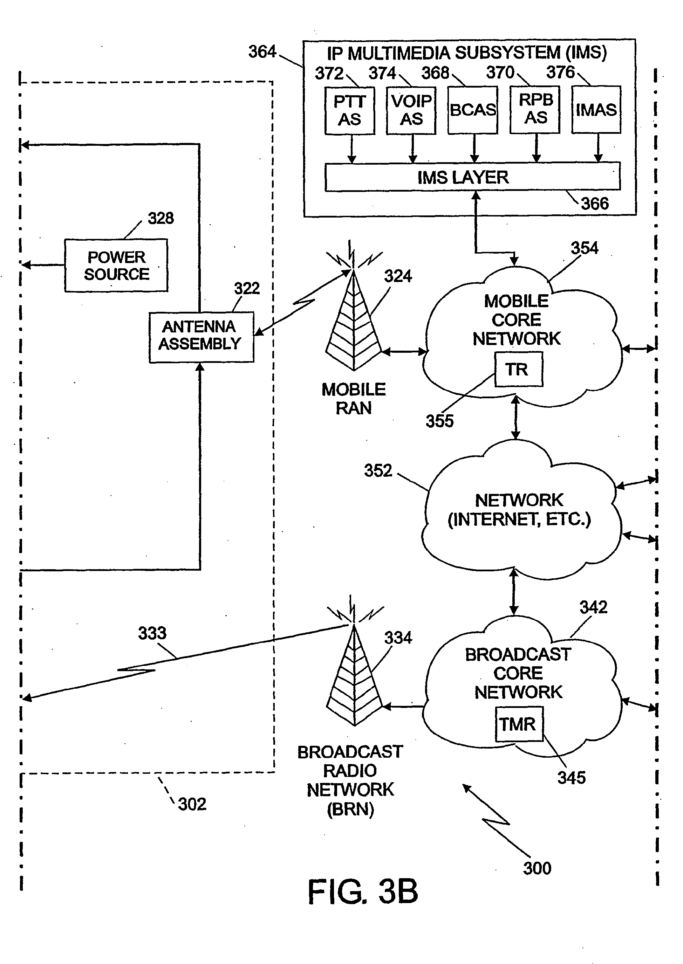

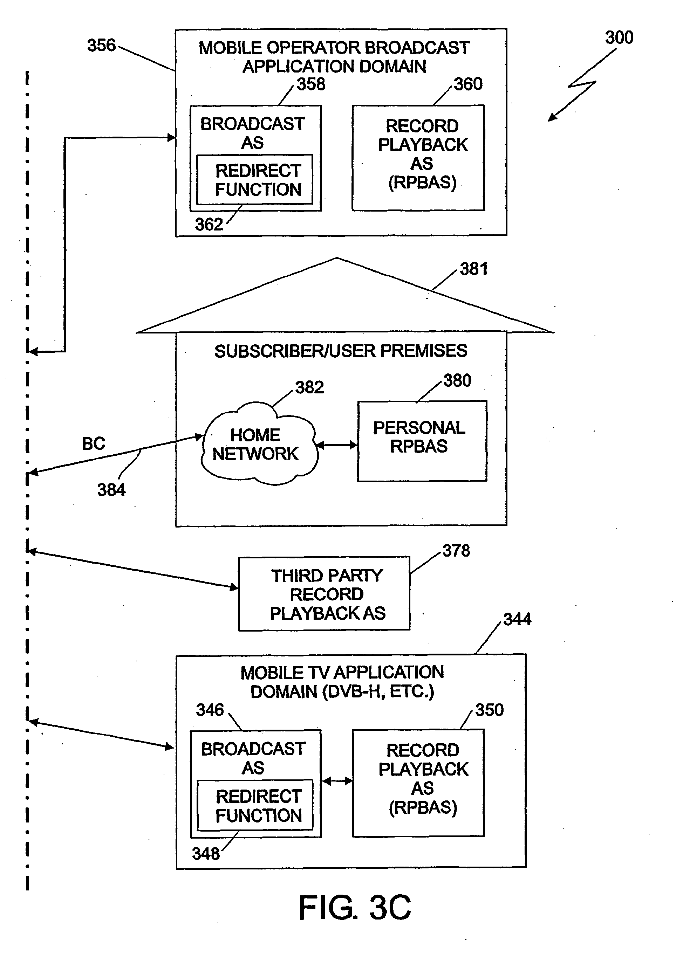

In block 112, the message or signal may be transmitted to the system or network to redirect the broadcast signals along with any options or instructions. An example of a system and means for redirecting the broadcast signals for recording the programming carried by the signals is illustrated and described with reference to Figure 3 below.

In block 114, a determination may be made whether there has been a change in the predetermined condition or event that resulted in the broadcast signals being redirected for recording the programming. For example, a determination may be made whether a condition set in the recorder or application server during the recording initiation has been met, e.g., whether a requested recording interval has expired. Alternately, a determination may be made whether a condition in the terminal or communications device has been met, e.g., the user has selected to end a recording that was initiated as an unspecified interval. If there has been no change in the condition or event that resulted in redirecting the broadcast signals, the broadcast signals may continue to be redirected in block 116. If there has been a change in the condition or event, the method 100 may advance to block 118.

In block 118, the user may be prompted whether to begin viewing the recorded program now or at a later time. In one embodiment of the present invention, the communications device or client may query an application server or the like for information about the recorded programming, such as sending a text message, email or other form of messaging to request a link to access the recorded programming in response to a change in the predetermined condition or event. Alternately, the user may query by accessing a predetermined Internet web page through which means to access the recorded programming is provided (e.g. web links). In another embodiment of the present invention, the application server or the like may transmit ("push") an indicator or message to the communications device or client with information enabling the mobile user to access the recorded programming. For instance, the indicator or message may be a text message, e-mail or the like containing a link to a web page with the recorded programming. These are examples of ways the mobile user may notify a system when there is a change in the predetermined condition or event and the system may provide an indicator or message with information for accessing the recorded programming. There are also other means that exploit other communication features and capabilities of the mobile communications device and system.

In block 120, a determination may be made whether the user selected to view the program now or later. If the user selected to view the recorded programming later, the method 100 may advance to block 122. In block 122, the user may be prompted to enter any options or instructions associated with viewing the programming later and continuing to record the programming. Similar to that previously described, any prompts associated with the invention may be presented and responded to via an interactive voice feature, a GUI presented on the display of the communications device or the like. The method 100 may then advance to block 116 and the broadcast signals may continue to be redirected for recording the programming carried by the signals.

If the user selects to begin viewing the recorded programming now in block 120, the method 100 may advance to block 124. In block 124, a message or signal may be transmitted to the system or network to request transmission of signals carrying the recorded programming directly from the RPBAS or recorder directly to the user's device for immediate viewing. This direct transmission for immediate viewing is commonly known as "streaming". The streaming connection may be setup or established by Internet protocols and methods such as those specified in the Internet Protocol (IP) multimedia subsystem (IMS) associated with releases 5 and 6 of 3GPP standards. The streamed signals may be transmitted to the communications device via the mobile RAN and core network.

In block 126, streamed signals of the recorded programming may be received time shifted from the recorder. Contemporaneous broadcast signals of the current or ongoing programming may continue to be redirected to record the ongoing programming according to any options or instructions. For example, if instructions are to redirect the broadcast signals and record the programming until an end of a current program, the system or network may detect completion of the current program before discontinuing to redirect the contemporaneous broadcast signals to the RPBAS or other recorder. In this manner, the user may be able to view a complete program time shifted for the duration of the predetermined condition or event, such as the communications device being shut-off or used for other purposes until the user elects to view the recorded program.

In block 128, a notice may be transmitted to the subscriber or user with regard to any pre-set options or instructions regarding continuing to redirect the broadcast signals and recording the programming, such as until the end of the current program, for a predetermined time, until further notice with a maximum time or the like. The user may also be prompted for any changes to the pre-set options or instructions.

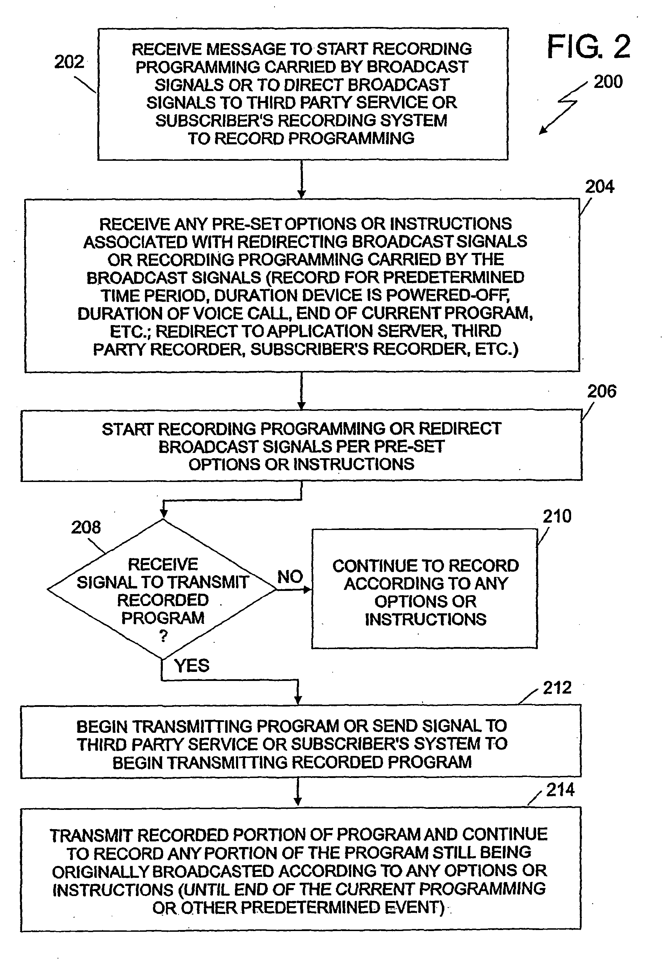

Figure 2 is a flow chart of an example of a method 200 for redirecting broadcast signals for recording in accordance with another embodiment of the present invention. The exemplary operations or functions illustrated in method 200 may be performed by a communications system, network or mobile television provider or the like or partly by a communications network, system, mobile television provider or the like and partly by a communications device or any combination thereof.

In block 202, a message to start recording programming carried by the broadcast signals may be received. The message may also instruct to direct the broadcast signals to a RPBAS associated with the broadcast network, the mobile network, or a third party service, or alternately to a subscriber's recording system to record the programming.

In block 204, any pre-set options or instructions associated with redirecting the broadcast signals or recording the programming carried by the broadcast signals may be received. Similar to that previously discussed, examples of the pre-set or pre-defined options or instructions may include: recording the programming carried by the broadcast signals for a predetermined time period; record the programming for the duration that the communications device is powered-off, or duration of a voice call or other communications; record the programming until the end of a current program; recording the programming until further notice with a maximum time; or similar instructions or options. The pre-set options or instructions may also redirect the broadcast signals to an application server or recorder in the mobile communications network, in the broadcast network, to a third party provider's recorder, or to a recorder or recording system in a network on the user's premises. In block 206, recording the programming may begin or the broadcast signals may be redirected to another recorder or system per any options or instructions. An example of a system and means for redirecting the broadcast signals and recording the programming carried by the broadcast signals is illustrated and described with reference to Figure 3.

In block 208, a determination may be made whether a signal to transmit broadcast signals carrying the recorded programming may have been received. If a signal or message to transmit signals of the recorded programming has not been received, the programming may continue to be recorded according to any options or instructions in block 210.

If a signal to transmit the recorded program or signals carrying the recorded program has been received, the method 200 may advance to block 212. In block 212, the recorded program or programming may be transmitted. If a third party service or subscriber system recorded the programming, a message or signal.may be sent to the third party service or subscriber system to begin transmitting the recorded programming.

In block 214, the recorded portion of the programming or program may be transmitted to the communications device or mobile TV device. Any of the program still being originally broadcasted or carried by contemporaneous broadcast signals may continue to be recorded according to any options or instructions. For example the programming carried by contemporaneous broadcast signals may continue to be recorded until the end of the current programming or other predetermined event that may have been selected as an option or provided in instructions.

Figures 3A, 3B and 3C (collectively Figure 3) is a block schematic diagram of an exemplary system 300 and communications device 302 for redirecting broadcast signals for recording programming carried by the signals in accordance with an embodiment of the present invention. The system 300 may be adapted to deliver broadcast content to a mobile device, such as device 302 or the like, by various means, while enabling bidirectional communication for the purpose of redirecting broadcast signals for recording and subsequent viewing according to user instructions. The communications device 302 may be a cordless telephone, cellular telephone, personal digital assistant (PDA), communicator, computer device or the like and is not unique to any particular communications standard, such as Advanced Mobile Phone Service (AMPS), Digital Advanced Mobile Phone Service (DAMPS), Global System for Mobile Communications (GSM), Code Division Multiple Access (CDMA) or the like. The design of the communications device 302 illustrated in Figure 3 is for purposes of explaining the present invention and the present invention is not limited to any particular design.

The communications device 302 may include an operator or user interface 304 to facilitate controlling operation of the communications device 302 including initiating and conducting phone calls and other communications. The user interface 304 may include a display 306 to provide visual signals to a subscriber or user as to the status and operation of the communications device 302. The display 306 may be a liquid crystal display (LCD) or the like capable of presenting color images. The display 306 may provide information to a user or operator in the form of images, text, numerals, characters, a graphical user interface (GUI) and the like. The display 306 may also be used to present programming carried by the broadcast signals described with respect to methods 100 and 200 of Figures 1 and 2, respectively.

The user interface 304 may also include a keypad 308 and function keys or buttons 310 including a pointing device, such as a joystick or the like. The keypad 308, function buttons and joystick 310 permit the user to communicate commands to the communications device 302 to dial phone numbers, initiate and terminate calls, establish other communications, such as access to a mobile TV provider, the Internet, send and receive email, text messages and the like. The keypad 308, function buttons and joystick 310 may also be used to control other operations of the communications device 302 including selection of broadcast channels for viewing and playback control of recorded content.

The display 306, keypad 308, and function buttons 310 may be coupled to a main processor and control logic unit 312. The main processor and control logic unit 312 may be a microprocessor or the like. The main processor and logic unit 312 may include a feature 314 for redirecting broadcast signals for recording programming. The functions and operations described with respect to a communications device in method 100 of Figure 1 and method 200 of Figure 2 may be embodied in the feature 314 for redirecting broadcast signals. The redirecting broadcast signals feature 314 may be embodied in hardware, firmware, software (data structures) or combinations thereof. The main processor and logic unit 312 may also include other data structures, software programs, computer applications and the like to encode and decode control signals; perform communication procedures and other functions as described herein.

The user interface 304 may also include a microphone 316 and a speaker 318. The microphone 316 may receive audio or acoustic signals from a user or from another acoustic source. The microphone 316 may convert the audio or acoustic signals to electrical signals. The microphone 316 may be connected to the main processor and logic unit 312 wherein the main processor and logic unit 312 may convert the electrical signals to baseband communication signals. The main processor and control logic unit 312 may be connected to a radio transmitter 320 that may convert baseband signals from the main processor and control logic unit 312 to radio frequency (RF) signals. The radio transmitter 320 may be connected to an antenna assembly 322 for transmission of the RF signals to a communication medium or system, such as a mobile radio access network (RAN) 324 or the like.

The antenna assembly 322 may receive RF signals over the air and transfer the RF signals to a radio receiver 326. The radio receiver 326 may convert the RF signals to baseband signals. The baseband signals may be applied to the main processor and control logic unit 312 which may convert the baseband signals to electrical signals. The processor and control unit 312 may send the electrical signals to the speaker 318 which may convert the electrical signals to audio signals that can be understood by the user.

A power source 328 may be connected to the main processor and control logic unit 312 to provide power for operation of the communications device 302. The power source 328 may be a rechargeable battery or the like. Processor 312 or redirecting feature 314 may monitor status of the power source 328 for redirecting the broadcast signals in accordance with the invention.

The communications device 302 may also include a mobile TV device 330. The mobile TV device 330 may be a DVB-H type device or the like. The mobile TV broadcast may be carried by mobile communications signals, such as a Multimedia Broadcast Multicast System (MBMS) broadcast feature in a mobile network. In this type system, the DVB-H receiver may be optional in the mobile device 330, but some mobile devices may have both MBMS and DVB-H capability in order to provide the widest possible mobile-TV coverage since technology choice may vary by system operator and/or region. The mobile TV device 330 may be integrally formed as part of the communications device 302 or may be a separate unit that may be connected and operate in association with the communications device 302. The mobile TV device 330 may include an antenna assembly 332 for receiving broadcast signals 333 of programming from a mobile TV broadcast network, broadcast radio network (BRN) 334 or the like. A transceiver 336 may be coupled to the antenna assembly 332 to receive the broadcast signals 333. A signal processor 338 may receive the broadcast signals 333 from the transceiver 336 and convert the signals to a format for presentation on the display 306 of the communications device 302 or on an auxiliary display 340. Typically, the auxiliary display 340 may be much larger and include more pixels than the display 306 of the communications device 302 and provide better picture quality. The auxiliary display 340 may also include an audio system (not shown) for better sound quality than the speaker 318 associated with the communications device 302. A connection 341 to the auxiliary display 340 may be a hardwired connection or a wireless connection via Bluetooth, Wireless Local Area Network (WLAN) or the like.

The broadcast radio network (BRN) 334 may be connected to a broadcast core network (BCN) 342 or the like. The broadcast core network 342 may transport the mobile TV or DVB-H broadcast data to the BRN 334 for broadcasting to communications devices or mobile TV devices, such as communications device 302 and mobile TV device 330. The BRN 334 may include a transmitter 345 to transmit the broadcast signals.

The BCN 342 may be connected to a mobile TV provider or mobile TV application domain 344. The mobile TV application domain 344 may originate programming for broadcasting to communications devices 302 or mobile TV devices 330 via the BCN 342 and BRN 334. The mobile TV application domain 344 may include a broadcast application server (BCAS) 346. The broadcast application server 346 may include a feature 348 for redirecting broadcast signals for recording programming. At least some of the functions and operations described with respect to the methods 100 and 200 of Figures 1 and 2 may be embodied in the broadcast application server 346 and the feature 348 for redirecting broadcast signals. The redirecting feature 348 may be embodied in hardware, firmware, software (data structures) or combinations thereof.

The mobile TV application domain 344 may also include a recorder or record playback application server (RPBAS) 350 or the like. The record playback application server 350 may include a digital video recorder (DVR) or the like that may be adapted to continue to record current programming carried by contemporaneous broadcast signals while playing back recorded programming from previously broadcasted signals similar to that described with respect to block 214 of method 200 (Figure 2).

The BCN 342 may be connected to the Internet 352 or other private network that may utilize Internet protocol (IP) or the like. The BCN 342 and the mobile TV application domain 344 may receive and transmit signals or messages to control the redirecting of broadcast signals for recording programming carried by the signals via the Internet 352. Messages and signals to control the playback of recorded programming may also be transmitted and received via the Internet 352 similar to that described with respect to methods 100 and 200 of Figures 1 and 2. The mobile RAN 324 may be coupled to a mobile core network (CN) 354. The mobile RAN 324 or the mobile CN 354 may include a transceiver 355 to transmit streamed signals carrying the recorded programming to the communications device 302 or mobile TV device 330. In one embodiment of the present invention, the mobile CN 342 may be connected to the Internet 352 or other network and to a mobile operator broadcast application domain 356. The broadcast signals may be redirected via the Internet 352 from the BCN 342 to the mobile operator broadcast application domain 356 for recording programming. The mobile operator broadcast application domain 344 may include a broadcast application server 358 and a recorder or record playback application server (RPBAS) 360 or the like for recording the programming carried by the broadcast signals. The broadcast application server 358 may include a redirect feature 362 that may embody some of the functions described with respect to methods 100 and 200 of Figure1 and 2, respectively.

In another embodiment of the present invention, an IP multimedia subsystem (IMS) 364 may be provided. The IMS 364 may be described as a mobile application network domain that may be coupled to the mobile CN 354 via an IMS layer 366, which provides common services and methods for associated application servers 368-376 to communicate with mobile devices in the network. The IMS 364 may embody various elements and functions. For example, the IMS 364 may include a broadcast application server (BCAS) 368 and record playback application server (RPBAS) 370 to receive redirected broadcast signals and perform recording and playback operations similar to those described with respect to methods 100 and 200 of Figures 1 and 2, respectively. Other examples of application servers that may be included in the IMS 364 may be a push-to-talk application server 372 for half-duplex voice communications, a voice-over-IP application server 374 for full-duplex voice communications, and an instant messaging application server (IMAS) 376.

In another embodiment of the present invention, as discussed with respect to methods 100 and 200, a third-party provider or third-party recorder or RPBAS 378 may be present and selected to receive the redirected broadcast signals and to record the programming carried by the redirected broadcast signals. The third-party RPBAS 378 may be connected to the Internet 352 to receive the redirected broadcast signals, play back the recorded programming and send and receive control signals or messages with respect to recording and play back.

Also, similar to that discussed with respect to methods 100 and 200 of Figures .1 and 2, respectively, a subscriber's or user's recorder system or personal RPBAS 380 at a subscriber's premises 381 may be selected to receive the redirected broadcast signals. The subscriber's personal RPBAS 354 may be connected to the Internet 352 or other network via the subscriber's home network 382 and a broadband connection (BC) 384 or the like. Accordingly, the subscriber's RPBAS 380 may receive the transmitted broadcast signals, playback the recorded programming and send and receive control signals similar to those functions described with respect to methods 100 and 200 via the Internet connection 352.

The flowcharts and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems which perform the specified functions or acts, or combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although specific embodiments have been illustrated and described herein, those of ordinary skill in the art appreciate that any arrangement which is calculated to achieve the same purpose may be substituted for the specific embodiments shown and that the invention has other applications in other environments. This application is intended to cover any adaptations or variations of the present invention. The following claims are in no way intended to limit the scope of the invention to the specific embodiments described herein.

## Claims

1. A method (100) for redirecting broadcast signals for recording, comprising:
detecting occurrence of a predetermined condition or event (102) by a mobile communications device (302), wherein the mobile communications device (302) includes or is associated with a mobile TV device (330) for receiving the broadcast signals;
transmitting a message to redirect the broadcast signals for recording programming carried by the broadcast signals (104), wherein the message to redirect the broadcast signals is transmitted from the mobile communications device (302) to a mobile radio access network (324); and
transmitting any options or instructions associated with redirecting the broadcast signals or recording the programming (112), from the mobile communications device (302) to the mobile radio access network (324).

2. The method (100) of claim 1, further comprising:
prompting a user whether to redirect the broadcast signals before transmitting the message (106); and
transmitting the message and any options or instructions to a system to redirect the broadcast signals in response to the user affirming redirection of the broadcast signals for recording (106, 110, 112).

3. The method (100) of claim 1, further comprising automatically transmitting the message to redirect the broadcast signals in response to detecting occurrence of the predetermined condition or event (104).

4. The method (100) of claim 1, wherein the predetermined condition or event comprises one of powering-off a communications device receiving the broadcast signals; a low power source condition in the communications device receiving the broadcast signals; the communications device receiving a voice call; or the communications device receiving another communication that hinders a user from viewing programming carried by the broadcast signals (102).

5. The method (100) of claim 1, wherein the options or instructions comprise at least one of:
redirecting the broadcast signals for a predetermined time period (110);
redirecting the broadcast signals for a duration that a communications device receiving the broadcast signals is powered-off (110);
redirecting the broadcast signals for a duration of a voice call or other communication received by the communications device (110);
recording programming carried by the broadcast signals until an end of a currently broadcasted program (110); and
continuing to record until further notice or until a pre-set maximum time duration (110).

6. The method (100) of claim 1, wherein transmitting the message to redirect the broadcast signals comprises transmitting a redirect signal to redirect the broadcast signals to one of a group (112) comprising a recorder or recording function in the communications network (360), a recorder or recording function in the broadcast network (350), a third-party recorder or recording function (378), and the user's own recorder or recording function (380).

7. The method (100) of claim 1, further comprising prompting a user whether to begin viewing a recorded program now or later in response to a change in the predetermined condition or event (118).

8. The method (100) of claim 7, further comprising prompting the user to enter any options or instructions associated with viewing the recorded program later and continuing to record the broadcast signals (122).

9. The method (100) of claim 7, further comprising:
receiving signals of a recorded portion of the program in response to selecting to begin viewing the program (126); and
continuing to redirect the broadcast signals to record the programming according to any options or instructions (126).

10. The method (100) of claim 1, further comprising sending a query for information about the recorded programming (118).

11. The method (100) of claim 1, further comprising requesting a link to access the recorded programming (118).

12. The method (100) of claim 1, further comprising providing a predetermined Internet web page accessible by the user to access the recorded programming (118).

13. The method (100) of claim 1, further comprising transmitting an indicator including information enabling access to the recorded programming (118).

14. The method (100) of claim 13, wherein transmitting the indicator comprises transmitting one of a text message, an e-mail message or another communication including a link to a web page for access to the recorded programming (118).

15. A method (200) for redirecting broadcast signals, comprising:
recording programming in response to receiving a message to start recording programming carried by broadcast signals (202) and according to any options or instructions (204), wherein the message to start recording programming being sent in response to detecting occurrence of a predetermined condition or event, the message being sent from a mobile communications device (302) to a mobile radio access network (324), and wherein the mobile communications device (302) includes or is associated with a mobile TV device (330) for receiving the broadcast signals;
transmitting signals of the recorded programming (212) to the mobile communications device (302) or mobile TV device (330) in response to receiving a signal to transmit the recorded programming, wherein the signal to transmit the recorded programming being sent in response to a change in the predetermined condition or event; and
continuing to record any portions of the programming according to any options or instructions (214).

16. The method (200) of claim 15, wherein the predetermined condition or event comprises one of powering-off a communications device receiving the broadcast signals; a low power source condition in the communications device receiving the broadcast signals; the communications device receiving a voice call; or the communications device receiving another communication that hinders a user from viewing programming carried by the broadcast signals (102).

17. The method (200) of claim 15, further comprising redirecting the broadcast signals to one of a third party recording service or a subscriber's recording system in response to any instructions to do so (202).

18. The method (200) of claim 15, wherein any options or instructions comprise at least one of:
recording the programming carried by the broadcast signals for a predetermined time period (204);
recording the programming for a duration that a communications device receiving the broadcast signals is powered-off (204);
recording the programming for a duration of a voice call or other communication received by the communications device (204);
recording the programming carried by the broadcast signals until an end of a currently broadcasted program (204); and
continuing to record the programming until further notice or expiration of a maximum time period (204).

19. A system (300) for redirecting broadcast signals for recording, comprising:
a recorder (350, 360, 370, 378, 380) to record programming in response to receiving a message to start recording programming carried by broadcast signals and to record programming according to any options or instructions (110, 204), wherein the message to start recording programming being sent by a mobile communications device (302) to a mobile radio access network (324) in response to detecting occurrence of a predetermined condition or event (102), wherein the mobile communications device (302) includes or is associated with a mobile TV device (330) for receiving the broadcast signals; and
a transceiver (345) to broadcast signals of the recorded programming in response to receiving a signal to transmit the recorded programming (124, 212), wherein the signal to transmit the recorded programming being sent by the communications device (302) in response to a change in the predetermined condition or event (114, 118).

20. The system (300) of claim 19, wherein the recorder (350, 360, 370, 378, 380) continues to record any portions of the programming according to any options or instructions (214).

21. The system (300) of claim 19, wherein any options or instructions (110, 204) comprise at least one of:
recording the programming carried by the broadcast signals for a predetermined time period (110, 204);
recording the programming for a duration that the communications device receiving the broadcast signals is powered-off (110, 204);
recording the programming for a duration of a voice call or other communication received by the communications device (110, 204);
recording the programming carried by the broadcast signals until an end of a currently broadcasted program (110, 204); and
continuing to record programming until further notice or until a maximum duration (110, 204).

22. The system (300) of claim 19, wherein the recorder is provided by one of a mobile operator (356), a mobile TV service provider (344), a third party provider (378) or a subscriber's recorder system (380).

23. The system (300) of claim 19, further comprising a web page accessing the recorded programming (118).

24. The system (300) of claim 19, further comprising means for transmitting an indicator including information enabling access to the recorded programming (342, 352, 354).

25. The system (300) of claim 24, further comprising means for transmitting one of a text message, an e-mail message or another communication including a link to a web page for access to the recorded programming (342, 352, 354).

26. A mobile communications device (302), comprising:
a feature (314) adapted to generate a message to redirect broadcast signals for recording programming carried by the broadcast signals in response to detecting occurrence of a predetermined condition or event, wherein the mobile communications device (302) includes or is associated with a mobile TV device (330) for receiving the broadcast signals; and
a transmitter (326) to transmit to a mobile radio access network (324) the message to redirect the broadcast signals and any options or instructions associated with redirecting the broadcast signals or recording the programming.

27. The communications device (302) of claim 26, wherein the mobile TV device (330) is integrated into the communications device (302) or the mobile TV device (330) is a separate device connectable to the communications device (302).

28. The communications device (302) of claim 27, further comprising an auxiliary display (340) connectable to the mobile TV device (302) to present the programming.

29. The communications device (302) of claim 26, further comprising means (312, 102) for detecting occurrence of the predetermined condition or event, wherein the predetermined condition or event (102) comprises one of powering-off the communications device receiving the broadcast signals; a low power source condition in the communications device receiving the broadcast signals; the communications device receiving a voice call; or the communications device receiving another communication that hinders a user from viewing progamming carried by the broadcast signals (102).

## Patentansprüche

1. Verfahren (100) zum Umlenken von ausgestrahlten Signalen für das Aufzeichnen, umfassend:
das Feststellen des Auftretens eines vorbestimmten Zustandes oder Ereignisses (102) mittels einer mobilen Kommunikationsvorrichtung (302), wobei die mobile Kommunikationsvorrichtung (302) eine mobile TV-Vorrichtung (330) zum Empfangen der ausgestrahlten Signale aufweist oder mit einer solchen in Zusammenhang steht;
das Senden einer Nachricht zum Umlenken der ausgestrahlten Signale zum Aufzeichnen des von den ausgestrahlten Signalen (104) getragenen Programms, wobei die Nachricht zum Umlenken der ausgestrahlten Signale von der mobilen Kommunikationsvornchtung (302) an ein mobiles Funkzugriffsnetz (324) gesendet wird; und
das Senden irgendwelcher Optionen oder Instruktionen, die mit dem Umlenken der ausgestrahlten Signale oder dem Aufzeichnen des Programms (112) in Zusammenhang stehen, von der mobilen Kommunikationsvorrichtung (302) an das mobile Funkzugriffsnetz (324).

2. Verfahren (100) nach Anspruch 1 ferner umfassend:
das Veranlassen eines Benutzers, dass er die ausgestrahlten Signale vor dem Senden der Nachricht (106) umlenkt; und
das Senden der Nachricht und irgendwelcher Optionen oder Instruktionen an ein System zum Umlenken der ausgestrahlten Signale in Reaktion darauf, dass der Benutzer, das Umlenken der ausgestrahlten Signale zum Aufzeichnen (106, 110, 112) bestätigt.

3. Verfahren (100) nach Anspruch 1 ferner umfassend das automatische Senden der Nachricht zum Umlenken der ausgestrahlten Signale in Reaktion darauf, dass das Auftreten des vorbestimmten Zustandes oder Ereignisses (104) festgestellt wird.

4. Verfahren (100) nach Anspruch 1, wobei der vorbestimmte Zustand oder das vorbestimmte Ereignis umfasst eines von Abschalten einer Kommunikationsvorrichtung, die die ausgestrahlten Signale empfängt; von einem Niederleistungsquellenzustand in der Kommunikationsvorrichtung, die die ausgestrahlten Signale empfängt; von dem Empfang eines Sprachanrufs durch die Kommunikationsvorrichtung, oder von dem Empfang einer anderen Mitteilung durch die Kommunikationsvorrichtung, die einen Benutzer daran hindert, das von den ausgestrahlten Signalen (102) getragene Programm zu betrachten.

5. Verfahren (100) nach Anspruch 1, wobei die Optionen oder Instruktionen mindestens einen der folgenden Vorgänge umfassen:
das Umlenken der ausgestrahlten Signale für eine vorbestimmten Zeitspanne (110);
das Umlenken der ausgestrahlten Signale für eine Dauer, während der die Kommunikationsvorrichtung, die die ausgestrahlten Signale empfängt, abgeschaltet (110) ist; das Umlenken der ausgestrahlten Signale für die Dauer eines Sprachanrufs oder einer anderen Mitteilung, die durch die Kommunikationsvorrichtung (110) empfangen wird;
das Aufzeichnen des von den ausgestrahlten Signalen getragenen Programms bis zu dem Ende eines gegenwärtig ausgestrahlten Programms (110); und
das Fortsetzen des Aufzeichnens bis zu einer weiteren Nachricht oder bis zu einer vorab eingestellten maximalen Zeitdauer (110).

6. Verfahren (100) nach Anspruch 1, wobei das Senden der Nachricht zum Umlenken der ausgestrahlten Signale das Senden eines Umlenksignals zum Umlenken der ausgestrahlten Signale an ein Teil einer Gruppe (112) umfasst, die einen Recorder oder eine Aufzeichnungsfunktion in dem Kommunikationsnetz (360), einen Recorder oder eine Aufzeichnungsfunktion in dem Ausstrahlungsnetz (350), einen Recorder oder eine Aufzeichnungsfunktion (378) eines Dritten und den eigenen Recorder oder die eigene Aufzeichnungsfunktion (380) des Benutzers umfasst.

7. Verfahren (100) nach Anspruch 1 ferner umfassend das Veranlassen eines Benutzers, dass er mit dem Betrachten eines ausgezeichneten Programms jetzt oder später in Reaktion auf eine Änderung des vorbestimmten Zustandes oder Ereignisses (118) beginnt.

8. Verfahren (100) nach Anspruch 7 ferner umfassend das Veranlassen eines Benutzers, irgendwelche Optionen oder Instruktionen, die mit der späteren Betrachtung des ausgezeichneten Programms in Zusammenhang stehen, einzugeben und das Aufzeichnen der ausgestrahlten Signale (122) fortzusetzen.

9. Verfahren (100) nach Anspruch 7 ferner umfassend:
das Empfangen von Signalen eines aufgezeichneten Teils des Programms in Reaktion darauf, den Beginn des Betrachtens des Programms (126) zu wählen; und
das Fortsetzen des Umlenkens der ausgestrahlten Signale zum Aufzeichnen des Programms in Übereinstimmung zu irgendwelchen Optionen oder Instruktionen (126).

10. Verfahren (100) nach Anspruch 1 ferner umfassend das Senden einer Anfrage nach Informationen über das aufgezeichnete Programm (118).

11. Verfahren (100) nach Anspruch 1 ferner umfassend die Anforderung eines Links für den Zugriff auf das aufgezeichnete Programm.

12. Verfahren (100) nach Anspruch 1 ferner umfassend das Zurverfügungstellen einer vorbestimmten Internetwebseite, die für den Benutzer für den Zugriff auf das aufgezeichnete Programm (118) zugänglich ist.

13. Verfahren (100) nach Anspruch 1 ferner umfassend das Senden eines Indikators, der eine Information enthält, die den Zugriff auf das aufgezeichnete Programm (118) ermöglicht.

14. Verfahren (100) nach Anspruch 13, wobei das Senden des Indikators das Senden eines von folgenden enthält einer Textnachricht, einer E-Mail-Nachricht oder einer anderen Mitteilung, die einen Link zu einer Webseite für den Zugriff auf das aufgezeichnete Programm (118) enthält.

15. Verfahren (200) zum Umlenken von ausgestrahlten Signalen, umfassend:
das Aufzeichnen eines Programms in Reaktion auf das Empfangen einer Nachricht, das Aufzeichnen des von den ausgestrahlten Signalen (102) getragenen Programms in Übereinstimmung mit irgendwelchen Optionen oder Instruktionen (204) zu beginnen, wobei die Nachricht, das Aufzeichnen des Programms zu beginnen, in Reaktion auf das Feststellen eines vorbestimmten Zustandes oder Ereignisses gesendet wird, wobei die Nachricht von einer mobilen Kommunikationsvorrichtung (302) an ein mobiles Funkzugtiffsnetz (324) gesendet wird und wobei die mobile Kommunikationsvorrichtung (302) eine mobile TV-Vorrichtung (330) zum Empfangen der ausgestrahlten Signale enthält oder mit einer solchen in Zusammenhang steht;
das Senden von Signalen des aufgezeichneten Programms (212) an die mobile Kommunikationsvorrichtung (302) oder die mobile TV-Vorrichtung (330) in Reaktion auf das Empfangen eines Signals zum Senden des aufgezeichneten Programms, wobei das Signal zum Senden des aufgezeichneten Programms in Reaktion auf eine Änderung des vorbestimmten Zustandes oder Ereignisses gesendet wird; und
das Fortsetzen des Aufzeichnens irgendwelcher Teile des Programms in Übereinstimmung mit irgendwelchen Optionen oder Instruktionen (214).

16. Verfahren (200) nach Anspruch 15, wobei der vorbestimmte Zustand oder das vorbestimmte Ereignis umfasst eines von dem Abschalten einer Kommunikationsvorrichtung, die die ausgestrahlten Signale empfängt; von einem Niederleistungsquellenzustand in der Kommunikationsvornchtung, die die ausgestrahlten Signale empfängt; von dem Empfang eines Sprachanrufs durch die Kommunikationsvorrichtung oder durch den Empfang einer anderen Mitteilung durch die Kommunikationsvorrichtung, die den Benutzer daran hindert, das von den ausgestrahlten Signalen (102) getragene Programm zu betrachten.

17. Verfahren (200) nach Anspruch 15 ferner umfassend das Umlenken der ausgestrahlten Signale entweder an den Aufzeichnungsdienst eines Dritten oder an ein Aufzeichnungssystem eines Abonnenten in Reaktion auf irgendwelche Instruktionen, dies zu tun (202).

18. Verfahren (200) nach Anspruch 15, wobei irgendwelche Optionen oder Instruktionen mindestens einen der folgenden Vorgänge umfasst:
das Aufzeichnen des von den ausgestrahlten Signalen getragenen Programms für eine vorbestimmte Zeitspanne (204);
das Aufzeichnen des Programms während der Dauer eines Sprachanrufs oder einer anderen Mitteilung, die durch die Kommunikationsvornchtung (204) empfangen wird;
das Aufzeichnen des von den ausgestrahlten Signalen getragenen Programms bis zum Ende eines gegenwärtig ausgestrahlten Programms (204); und
das Fortsetzen des Aufzeichnens des Programms bis auf weiteres oder bis zu dem Ablauf einer maximalen Zeitdauer (204).

19. System (300) zum Umlenken von ausgestellten Signalen für das Aufzeichnen, umfassend
einen Recorder (350, 360, 370, 378, 380) zum Aufzeichnen eines Programms in Reaktion auf den Empfang einer Nachricht, das Aufzeichnen des von den ausgestrahlten Signalen getragenen Programms zu beginnen und das Programm in Übereinstimmung mit irgendwelchen Optionen und Instruktionen (110, 204) aufzuzeichnen, wobei die Nachricht, das Aufzeichnen des Programms zu beginnen, von einer mobilen Kommunikationsvorrichtung (302) an ein mobiles Funkzugriffsnetz (324) in Reaktion auf das Feststellen des Auftretens eines vorbestimmten Zustandes oder Ereignisses (102) gesendet wird, wobei die mobile Kommunikationsvorrichtung (302) eine mobile TV-Vorrichtung (330) zum Empfangen der ausgestrahlten Signale enthält oder mit einer solchen in Zusammenhang steht; und
einen Sender/Empfänger (175) zum Ausstrahlen von Signalen des aufgezeichneten Programms in Reaktion auf das Empfangen eines Signals, das aufgezeichnete Programm (124, 212) zu senden, wobei das Signal, das aufgezeichnete Programm zu senden, durch die Kommunikationsvorrichtung (302) in Reaktion auf eine Änderung des vorbestimmten Zustandes oder Ereignisses (114, 118) gesendet wird

20. System (300) nach Anspruch 19, wobei der Recorder (350, 360, 370, 378, 380) das Aufzeichnen irgendwelcher Teile ded Programms in Übereinstimmung mit irgendwelchen Optionen oder Instruktionen (170) fortsetzt.

21. System (300) nach Anspruch 19, wobei irgendwelche Optionen oder Instruktionen (110, 204) mindestens einen der folgenden Vorgänge umfassen:
das Aufzeichnen des durch die ausgestrahlten Signale getragenen Programms für eine vorbestimmte Zeitdauer (110, 204);
das Aufzeichnen des Programms für eine Dauer, während der die Kommunikationsvorrichtung, die die ausgestrahlten Signale empfängt, abgeschaltet ist (110, 204);
das Aufzeichnen des Programms für die Dauer eines Sprachanrufs oder einer anderen Mitteilung, die durch die Kommunikationsvorrichtung (110, 204) empfangen wird;
das Aufzeichnen des von den ausgestrahlten Signalen getragenen Programms bis zum Ende eines gegenwärtig ausgestrahlten Programms (110, 204); und
das Fortsetzen des Aufzeichnens des Programms bis zu einer weiteren Nachricht oder bis zu einer maximalen Dauer (110, 204).

22. System (300) nach Anspruch 19, wobei der Recorder durch einen mobilen Operator (356), einen mobilen Provider (344) für einen TV-Dienst, einen Provider (178) als dritte Person oder ein Aufzeichnungssystem (380) eines Abonnenten zur Verfügung gestellt wird.

23. System (300) nach Anspruch 19, ferner umfassend eine Webseite, die auf das aufgezeichnete Programm (118) zugreift.

24. System (300) nach Anspruch 19, ferner umfassend ein Mittel zum Senden eines Indikators, der eine Information enthält, die den Zugriff auf das aufgezeichnete Programm (342, 352, 354) ermöglicht.

25. System (300) nach Anspruch 24, ferner umfassend ein Mittel zum Senden eines von einer Textnachricht, einer E-Mail-Nachricht oder einer anderen Mitteilung umfasst, die einen Link zu einer Webseite für den Zugriff auf das aufgezeichnete Programm (118) aufweist.

26. Mobile Kommunikationsvorrichtung (302), umfassend:
ein Merkmal (314), das zur Erzeugung einer Nachricht, die ausgestrahlten Signale zum Aufzeichnen des von den ausgestrahlten Signalen getragenen Programms in Reaktion auf das Feststellen des Auftretens eines vorbestimmten Zustandes oder Ereignisses umzulenken, geeignet oder bestimmt ist, wobei die mobile Kommunikationsvorrichtung (302) eine mobile TV-Vorrichtung (330) zum Empfangen der ausgestrahlten Signale aufweist oder mit einer solchen in Zusammenhang steht; und
einen Sender (326) zum Senden der Nachricht zum Umlenken der ausgestrahlten Signale und irgendwelcher Optionen oder Instruktionen, die mit den Umlenken der ausgestrahlten Signale oder dem Aufzeichnen des Programms in Zusammenhang stehen, an ein mobiles Finkzugriffsnetz (324)

27. Kommunikationsvorrichtung (302) nach Anspruch 26, wobei die mobile TV-Vorrichtung (330) in die Kommunikationsvorrichtung (302) integriert ist oder die mobile TV-Vorrichtung (330) eine separate Vorrichtung ist, die mit der Kommunikationsvorrichtung (302) verbunden werden kann.

28. Kommunikationsvorrichtung (302) nach Anspruch 27 ferner umfassend ein Hilfsdisplay (340), das mit der TV-Vornchtung (330) zum Darstellen des Programms verbunden werden kann.

29. Kommunikationsvorrichtung (302) nach Anspruch 26 ferner umfassend Mittel (312, 102) zum Feststellen des Auftretens des vorbestimmten Zustandes oder Ereignisses, wobei der vorbestimmte Zustand oder das vorbestimmte Ereignis (102) umfasst eines von dem Abschalten der Kommunikationsvorrichtung, die die ausgestrahlten Signale empfängt, von einem Niederleistungsquellenzustand in der Kommunikationsvorrichtung, die die ausgestrahlten Signale empfängt; von dem Empfang eines Sprachanrufs durch die Kommunikationsvorrichtung; oder von dem Empfang einer anderen Nachricht durch die Kommunikationsvorrichtung, die einen Benutzer daran hindert, das von den ausgestrahlten Signalen (102) getragene Programm zu betrachten.

## Revendications

1. Procédé (100) pour réacheminer des signaux de diffusion pour l'enregistrement, comprenant les étapes consistant à :
détecter la survenance d'une condition ou d'un événement prédéterminé (102) par un dispositif de communication mobile (302), dans lequel le dispositif de communication mobile (302) comporte ou est associé à un dispositif de télévision mobile (330) pour recevoir les signaux de diffusion ;
transmettre un message pour réacheminer les signaux de diffusion pour enregistrer une programmation transportée par les signaux de diffusion (104), dans lequel le message pour réacheminer les signaux de diffusion est transmis en provenance du dispositif de communication mobile (302) à destination d'un réseau d'accès radio mobile (324) ; et
transmettre n'importe quelles options ou instructions associées au réacheminement des signaux de diffusion ou à l'enregistrement de la programmation (112), en provenance du dispositif de communication mobile (302) à destination du réseau d'accès radio mobile (324).

2. Procédé (100) selon la revendication 1, comprenant en outre les étapes consistant à :
avertir un utilisateur s'il faut faire suivre les signaux de diffusion avant la transmission du message (106) ; et
transmettre le message et n'importe quelles options ou instructions à un système pour réacheminer les signaux de diffusion en réponse à l'utilisateur confirmant le réacheminement des signaux de diffusion pour l'enregistrement (106, 110, 112).

3. Procédé (100) selon la revendication 1, comprenant en outre l'étape consistant à transmettre automatiquement le message pour réacheminer les signaux de diffusion en réponse à la détection de la survenance de la condition ou de l'événement prédéterminé (104).

4. Procédé (100) selon la revendication 1, dans lequel la condition ou l'événement prédéterminé comprend l'un de la mise hors tension d'un dispositif de communication recevant les signaux de diffusion ; d'un état de source d'alimentation faible dans le dispositif de communication recevant les signaux de diffusion ; du dispositif de communication recevant un appel vocal ; ou du dispositif de communication recevant une autre communication qui empêche un utilisateur de visualiser une programmation transportée par les signaux de diffusion (102).

5. Procédé (100) selon la revendication 1, dans lequel les options ou les instructions comprennent au moins l'un :
du réacheminement des signaux de diffusion pendant une période de temps prédéterminée (110) ;
du réacheminement des signaux de diffusion pendant le temps qu'un dispositif de communication recevant les signaux de diffusion est hors tension (110) ;
du réacheminement des signaux de diffusion pendant le temps d'un appel vocal ou d'une autre communication reçue par le dispositif de communication (110) ;
de l'enregistrement d'une programmation transportée par les signaux de diffusion jusqu'à la fin d'un programme actuellement diffusé (110) ; et
de la continuation de l'enregistrement jusqu'à nouvel ordre ou jusqu'à une durée de temps maximale définie à l'avance (110).

6. Procédé (100) selon la revendication 1, dans lequel la transmission du message pour réacheminer les signaux de diffusion comprend la transmission d'un signal de redirection pour réacheminer les signaux de diffusion vers l'un d'un groupe (112) comprenant un enregistreur ou une fonction d'enregistrement dans le réseau de communication (360), un enregistreur ou une fonction d'enregistrement dans le réseau de diffusion (350), un enregistreur ou une fonction d'enregistrement tiers (378), et le propre enregistreur ou fonction d'enregistrement de l'utilisateur (380).

7. Procédé (100) selon la revendication 1, comprenant en outre l'étape consistant à avertir un utilisateur s'il faut commencer à visualiser un programme enregistré, maintenant ou plus tard, en réponse à un changement de la condition ou de l'événement prédéterminé (118).

8. Procédé (100) selon la revendication 7, comprenant en outre l'étape consistant à inviter l'utilisateur à entrer n'importe quelles options ou instructions associées à la visualisation ultérieure du programme enregistré et à la continuation de l'enregistrement des signaux de diffusion (122).

9. Procédé (100) selon la revendication 7, comprenant en outre :
la réception des signaux d'une partie enregistrée du programme en réponse à la sélection du commencement à visualiser le programme (126) ; et
la continuation du réacheminement des signaux de diffusion pour enregistrer la programmation selon n'importe quelles options ou instructions (126).

10. Procédé (100) selon la revendication 1, comprenant en outre l'envoi d'une demande d'informations concernant la programmation enregistrée (118).

11. Procédé (100) selon la revendication 1, comprenant en outre la requête d'un lien pour avoir accès à la programmation enregistrée (118).

12. Procédé (100) selon la revendication 1, comprenant en outre la fourniture d'une page Web Internet prédéterminée accessible par l'utilisateur pour avoir accès à la programmation enregistrée (118).

13. Procédé (100) selon la revendication 1, comprenant en outre la transmission d'un indicateur comprenant des informations permettant l'accès à la programmation enregistrée (118).

14. Procédé (100) selon la revendication 13, dans lequel la transmission de l'indicateur comprend la transmission de l'un d'un message de texte, d'un message de courrier électronique ou d'une autre communication comprenant un lien vers une page Web pour l'accès à la programmation enregistrée (118).

15. Procédé (200) pour réacheminer des signaux de diffusion, comprenant les étapes consistant à :
enregistrer une programmation en réponse à la réception d'un message pour commencer à enregistrer la programmation transportée par les signaux de diffusion (202) et selon n'importe quelles options ou instructions (204), dans lequel le message pour commencer à enregistrer la programmation est envoyé en réponse à la détection de la survenance d'une condition ou d'un événement prédéterminé, le message étant envoyé en provenance d'un dispositif de communication mobile (302) à destination d'un réseau d'accès radio mobile (324), et dans lequel le dispositif de communication mobile (302) comprend ou est associé à un dispositif de télévision mobile (330) pour recevoir les signaux de diffusion ;
transmettre des signaux de la programmation enregistrée (212) au dispositif de communication mobile (302) ou au dispositif de télévision mobile (330) en réponse à la réception d'un signal pour transmettre la programmation enregistrée, dans lequel le signal pour transmettre la programmation enregistrée est envoyé en réponse à un changement de la condition ou de l'événement prédéterminé ; et
continuer à enregistrer n'importe quelles parties de la programmation selon n'importe quelles options ou instructions (214).

16. Procédé (200) selon la revendication 15, dans lequel la condition ou l'événement prédéterminé comprend l'un d'une mise hors tension du dispositif de communication recevant les signaux de diffusion ; d'un état de source d'alimentation faible dans le dispositif de communication recevant les signaux de diffusion ; du dispositif de communication recevant un appel vocal ; ou du dispositif de communication recevant une autre communication qui empêche un utilisateur de visualiser la programmation transportée par les signaux de diffusion (102).

17. Procédé (200) selon la revendication 15, comprenant en outre le réacheminement des signaux de diffusion vers l'un d'un service d'enregistrement de tiers ou d'un système d'enregistrement d'un abonné en réponse à n'importe quelles instructions de faire ainsi (202).

18. Procédé (200) selon la revendication 15, dans lequel n'importe quelles options ou instructions comprennent au moins l'une des étapes consistant à :
enregistrer la programmation transportée par les signaux de diffusion pendant une période de temps prédéterminée (204) ;
enregistrer la programmation pendant le temps qu'un dispositif de communication recevant les signaux de diffusion est hors tension (204) ;
enregistrer la programmation pendant le temps d'un appel vocal ou d'une autre communication reçue par le dispositif de communication (204) ;
enregistrer la programmation transportée par les signaux de diffusion jusqu'à la fin d'un programme actuellement diffusé (204) ; et
continuer à enregistrer la programmation jusqu'à nouvel ordre ou à l'expiration d'une période de temps maximale (204).

19. Système (300) pour réacheminer des signaux de diffusion pour l'enregistrement, comprenant :
un enregistreur (350, 360, 370, 378, 380) pour enregistrer la programmation en réponse à la réception d'un message pour commencer à enregistrer la programmation transportée par des signaux de diffusion et pour enregistrer la programmation selon n'importe quelles options ou instructions (110, 204), dans lequel le message pour commencer à enregistrer la programmation est envoyé par un dispositif de communication mobile (302) à un réseau d'accès radio mobile (324) en réponse à la détection de la survenance d'une condition ou d'un événement prédéterminé (102), dans lequel le dispositif de communication mobile (302) comprend ou est associé à un dispositif de télévision mobile (330) pour recevoir les signaux de diffusion ; et
un émetteur-récepteur (345) pour radiodiffuser les signaux de la programmation enregistrée en réponse à la réception d'un signal pour transmettre la programmation enregistrée (124, 212), dans lequel le signal pour transmettre la programmation enregistrée est envoyé par le dispositif de communication (302) en réponse à un changement de la condition ou de l'événement prédéterminé (114, 118).

20. Système (300) selon la revendication 19, dans lequel l'enregistreur (350, 360, 370, 378, 380) continue à enregistrer n'importe quelles parties de la programmation selon n'importe quelles options ou instructions (214).

21. Système (300) selon la revendication 19, dans lequel n'importe quelles options ou instructions (110, 204) comprennent au moins l'une des étapes consistant à :
enregistrer la programmation transportée par les signaux de diffusion pendant une période de temps prédéterminée (110, 204) ;
enregistrer la programmation pendant le temps qu'un dispositif de communication recevant les signaux de diffusion est hors tension (110, 204) ;
enregistrer la programmation pendant le temps d'un appel vocal ou d'une autre communication reçue par le dispositif de communication (110, 204) ;
enregistrer la programmation transportée par les signaux de diffusion jusqu'à la fin d'un programme actuellement diffusé (110, 204) ; et
continuer à enregistrer la programmation jusqu'à nouvel ordre ou jusqu'à une durée maximale (110, 204).

22. Système (300) selon la revendication 19, dans lequel l'enregistreur est fourni par un opérateur du service mobile (356), un fournisseur de service de télévision mobile (344), un fournisseur tiers (378) ou un système enregistreur d'un abonné (380).

23. Système (300) selon la revendication 19, comprenant en outre une page Web ayant accès à la programmation enregistrée (118).

24. Système (300) selon la revendication 19, comprenant en outre un moyen pour transmettre un indicateur comprenant des informations permettant l'accès à la programmation enregistrée (342, 352, 354).

25. Système (300) selon la revendication 19, comprenant en outre un moyen pour transmettre l'un d'un message de texte, d'un message de courrier électronique ou d'une autre communication comprenant un lien vers une page Web pour avoir accès à la programmation enregistrée (342, 352, 354).

26. Dispositif de communication mobile (302), comprenant :
une particularité (314) conçue pour produire un message pour réacheminer les signaux de diffusion pour enregistrer la programmation transportée par les signaux de diffusion en réponse à la détection de la survenance d'une condition ou d'un événement prédéterminé, dans lequel le dispositif de communication mobile (302) comprend ou est associé à un dispositif de télévision mobile (330) pour recevoir les signaux de diffusion ; et
un émetteur (326) pour transmettre à un réseau d'accès radio mobile (324) le message pour réacheminer les signaux de diffusion et n'importe quelles options ou instructions associées au réacheminement des signaux de diffusion ou à l'enregistrement de la programmation.

27. Dispositif de communication (302) selon la revendication 26, dans lequel le dispositif de télévision mobile (330) est intégré dans le dispositif de communication (302) ou bien le dispositif de télévision mobile (330) est un dispositif distinct pouvant être relié au dispositif de communication (302).

28. Dispositif de communication (302) selon la revendication 27, comprenant en outre un afficheur auxiliaire (340) pouvant être relié au dispositif de télévision mobile (302) pour présenter la programmation.

29. Dispositif de communication (302) selon la revendication 26, comprenant en outre un moyen (312, 102) pour détecter la survenance de la condition ou de l'événement prédéterminé, dans lequel la condition ou l'événement prédéterminé (102) comprend l'un de la mise hors tension du dispositif de communication recevant les signaux de diffusion ; d'un état de source d'alimentation faible dans le dispositif de communication recevant les signaux de diffusion ; du dispositif de communication recevant un appel vocal ; ou du dispositif de communication recevant une autre communication qui empêche un utilisateur de visualiser la programmation transportée par les signaux de diffusion (102).
